# FASCICULE DE BREVET EUROPEEN

(11) **EP 3 592 506 B1**
(45) Date de publication et mention de la délivrance du brevet: **06.09.2023**
(21) Numéro de dépôt: 18707950.4
(22) Date de dépôt: 13.02.2018
(51) Int. Cl.: B25B 27/00, B25B 27/14, B60N 2/015

(54) **OUTIL POUR L'ASSEMBLAGE D'UN SIÈGE DANS UN VÉHICULE**
WERKZEUG ZUR MONTAGE EINES SITZES IN EINEM FAHRZEUG
TOOL FOR ASSEMBLING A SEAT IN A VEHICLE

(30) Priorité: 07.03.2017 FR 1751822
(43) Date de publication de la demande: 15.01.2020
(73) Titulaire: PSA Automobiles SA, 78300 Poissy (FR)
(72) Inventeur: RAULT, Jean Pierre, 35200 Rennes (FR); SARRAZIN, Didier, 35000 Rennes (FR); LE BORGNE, David, 35320 Crevin (FR)
(86) Numéro de dépôt international: PCT/FR2018/050350
(87) Numéro de publication internationale: WO 2018/162814

(56) Documents cités:
- WO-A1-2012/069742
- WO-A2-2007/083203
- FR-A1- 3 021 001

## Description

La présente invention concerne de manière générale un outil pour l'assemblage d'un siège dans un véhicule. En outre, la présente invention concerne un système pour l'assemblage d'un siège dans un véhicule ainsi qu'un procédé d'assemblage d'un siège dans un véhicule.

Il est connu dans l'art antérieur des sièges de véhicule, et notamment des sièges de véhicule amovibles et escamotables. Ainsi, le document FR3001926 décrit de tels sièges ainsi qu'une cuvette dans un plancher de véhicule pour les accueillir.

En contrepartie, aucun dispositif ou procédé n'existe pour faciliter l'assemblage d'un tel siège en usine lors de la fabrication du véhicule. Il est ainsi nécessaire d'assembler manuellement chaque siège au véhicule par un opérateur sans aucune assistance, ce qui nécessite un certain temps et consiste en une succession d'opérations peu ergonomiques pour l'opérateur.

Un but de la présente invention est de répondre aux inconvénients du document de l'art antérieur mentionnés ci-dessus et en particulier, de proposer un outil pour faciliter l'assemblage d'un siège dans un véhicule ainsi qu'un procédé simplifié d'assemblage, permettant de réduire le temps de fabrication et de simplifier la tâche de l'opérateur en la rendant plus simple et/ou plus ergonomique.

Pour cela un premier aspect de l'invention concerne un outil pour l'assemblage d'un siège dans un véhicule selon la revendication 1. Une telle configuration de l'outil permet une stabilité optimale quand l'outil est en position d'assemblage dans le véhicule. De plus la poignée permet donc à un opérateur de tirer l'outil afin de le dégager de sa position d'assemblage et donc permettre l'arrimage du siège au moyen d'arrimage.

Un tel outil permet de réaliser efficacement l'assemblage d'un siège à un véhicule, c'est-à-dire rapidement, sans risque de mauvais assemblage et sans difficulté ergonomique pour l'opérateur. En effet, la rampe permettant de faire coulisser le siège évite notamment à l'opérateur de soulever le siège.

Un second aspect de l'invention est un système pour l'assemblage d'un siège dans un véhicule selon la revendication 3.
- Avantageusement, le système comprend, selon un axe longitudinal du véhicule, un moyen d'arrimage avant et deux moyens d'arrimage arrière, et ledit outil dans la position d'assemblage un outil selon le premier aspect de l'invention, le système comprenant selon un axe longitudinal du véhicule, un moyen d'arrimage avant et un moyen d'arrimage arrière, et ledit outil dans la position d'assemblage est positionné avec les butées avec les moyens d'arrimage arrière pour immobiliser ledit outil. L'outil est donc stable dans la position d'assemblage et ne peut donc pas être soumis à des mouvements involontaires préjudiciables à l'assemblage correct du siège.

Avantageusement, le siège dans la position d'accostage est arrimé au moyen d'arrimage avant et à proximité du moyen d'arrimage arrière, donc non arrimé au moyen d'arrimage arrière. Ceci afin de retenir le siège lorsque l'outil est dégagé et permettre alors l'assemblage au moyen d'arrimage arrière par gravité, c'est-à-dire par un mouvement de l'arrière du siège vers le bas de façon à engager le moyen d'arrimage arrière.

Un dernier aspect de l'invention est un procédé d'assemblage d'un siège dans un véhicule selon la revendication 6.

On entend par « position intermédiaire » du siège une position dans laquelle le siège est posé sur l'outil à l'intérieur du véhicule, par exemple sur le seuil de coffre quand le siège prend place dans un coffre de véhicule. De plus, on entend par « position d'accostage » du siège une position dans laquelle les attaches arrière du siège sont situées à proximité des moyens d'arrimage arrière sans pouvoir les engager du fait de la présence de l'outil.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente un outil pour l'assemblage d'un siège dans un véhicule selon la présente invention.
- les figures 2 à 6 représentent les étapes, vues de dessus, d'un procédé d'assemblage d'un siège dans un véhicule utilisant un outil selon la présente invention,
- la figure 7 représente l'étape du procédé montrée à la figure 4 en vue latérale.

L'invention concerne de manière générale un outil pour l'assemblage de tout type de siège de véhicule et un procédé pour effectuer un tel assemblage. Par exemple, il peut s'agir d'un siège amovible et escamotable d'une troisième rangée de sièges dans un véhicule de type monospace ou véhicule utilitaire de sport (SUV). Cependant, il peut s'agir de tout autre type de siège, par exemple conducteur ou passager, amovible, escamotable ou non. En outre, un tel siège peut être assemblé à tout type de véhicule tel qu'un véhicule individuel, collectif ou utilitaire.

Dans la présente description, les termes « avant » et « arrière » ont toujours pour référence l'axe longitudinal ou de direction du véhicule et un élément « avant » est donc situé vers l'avant du véhicule, c'est-à-dire vers le siège conducteur du véhicule.

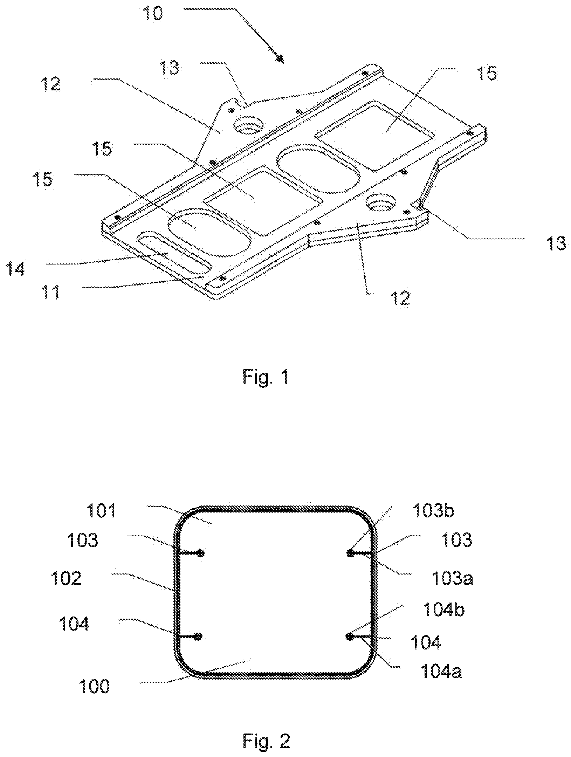

La figure 1 représente un mode de réalisation d'un outil 10 pour l'assemblage d'un siège dans un véhicule. Cet outil 10 comprend une surface longitudinale 11 centrale avec de part et d'autre deux ailes 12 munies de butées 13 en forme de U, c'est-à-dire en forme de fente, de creux ou de recoin. Les ailes 12 sont transversales, c'est-à-dire agencées dans une direction perpendiculaire à la direction longitudinale de l'outil 10 et de la surface longitudinale 11. Les butées 13 sont longitudinales, c'est-à-dire agencées pour prendre appui dans la direction longitudinale de l'outil 10 et de la surface longitudinale 11. L'outil 10 comprend de plus un évidement 14 proximal agencé pour servir de poignée, ainsi que plusieurs évidements 15 destinés à réduire le poids de l'outil 10.

Comme expliqué ci-après, les butées 13 sont destinées à coopérer avec des moyens d'arrimage attachés au véhicule de telle sorte à positionner et sécuriser l'outil 10 au sein du véhicule lors de l'assemblage d'un siège au véhicule. De plus, la surface longitudinale 11 est destinée à accueillir un siège de véhicule au moins dans une position intermédiaire, c'est-à-dire positionné dans le véhicule, mais non encore assemblé ou arrimé au véhicule.

L'outil 10 est fabriqué dans tout type de matériau rigide présentant une bonne résistance mécanique et un coefficient de frottement réduit. Par exemple, l'outil 10 est fabriqué en métal poli ou en polymère rigide comme le polycarbonate ou le poly(tétrafluoroethylène), ce qui permet de réduire son poids. En outre l'outil 10 peut être fabriqué dans un premier matériau rigide et comprendre sur une surface de travail un deuxième matériau à faible coefficient de frottement pour former la surface longitudinale 11.

En référence aux figures 2 à 7, est décrit un procédé d'assemblage d'un siège à un véhicule utilisant un outil 200 selon une représentation schématique de l'outil 10 en référence à la figure 1.

La figure 2 représente une cuvette 100 d'un véhicule comprenant un fond 101 et des parois latérales 102. Cette cuvette 100 peut être aménagée dans un plancher de véhicule, par exemple un plancher de coffre ou un plancher d'habitacle ou sur tout autre surface destinée à recevoir un siège. Les parois latérales 102 de la cuvette 100 sont munies de moyens d'arrimage avant 103 et de moyens d'arrimage arrière 104, selon l'axe longitudinal du véhicule. C'est-à-dire que les moyens d'arrimage avant 103 sont situés vers l'avant du véhicule par rapport aux moyens d'arrimage arrière situés vers l'arrière du véhicule.

Les moyens d'arrimage 103,104 sont identiques et ont une forme de tourillon, diabolo ou plot bordé. C'est-à-dire qu'ils comprennent une tige ou gorge 103a, 104a et un bout ou une tête 103b,104b. Ces moyens d'arrimage sont destinés à permettre l'arrimage ou l'assemblage d'un siège de véhicule, comme expliqué ci-après.

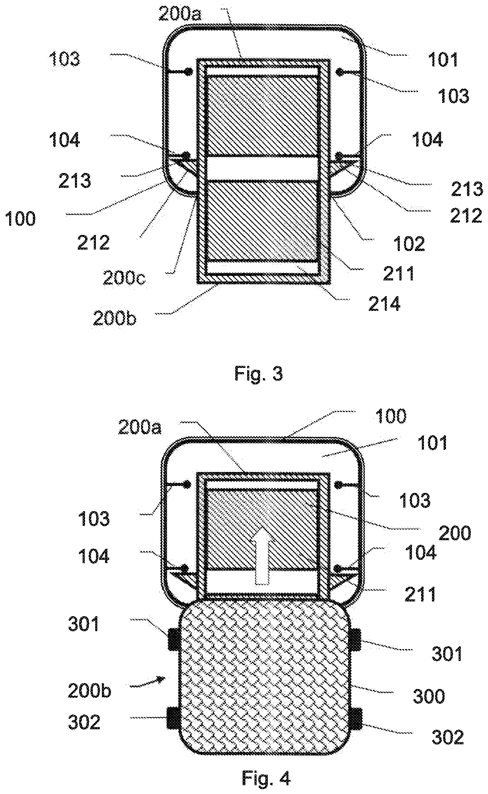

Ainsi, sur la figure 3, un outil 200 est placé dans la cuvette 100 dans une première étape du procédé d'assemblage. Cet outil 200 comprend une surface longitudinale 211 centrale ainsi que deux ailes 212 opposées comprenant chacune une butée 213 sous la forme d'une surface transversale, c'est-à-dire s'étendant perpendiculairement à la surface longitudinale 211, de part et d'autre de la surface longitudinale 211.

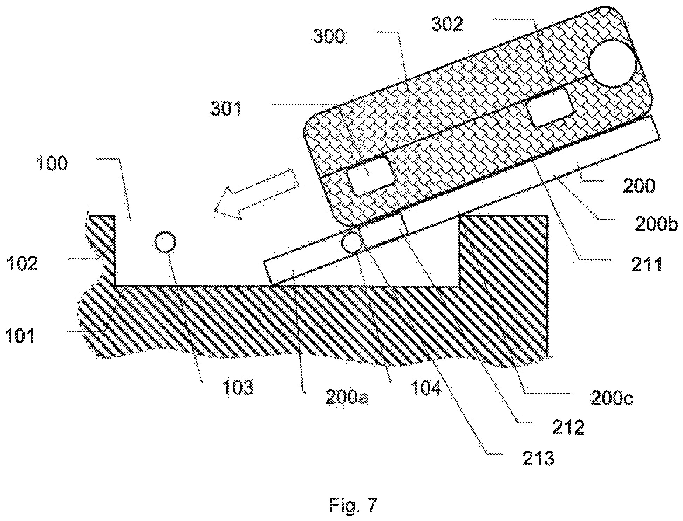

Sur la figure 3, une partie avant 200a de l'outil 200 (sur le haut de la figure 3) est en contact avec le fond 101 de la cuvette 100 alors qu'une partie arrière 200b de l'outil 200 (bas de la figure 3) est située en dehors de la cuvette 100. Ainsi, une partie médiane 200c est en appui sur la paroi latérale 102 de la cuvette 100, et l'outil 200 est donc incliné par rapport à un axe horizontal et par rapport au fond 101, comme visible sur la figure 7. L'outil est alors dans une position d'assemblage, apte à recevoir un siège pour en faciliter l'assemblage ou l'arrimage au véhicule.

Sur les figures 4 et 7, dans une deuxième étape, un siège 300 est déposé dans une position intermédiaire sur la partie arrière 200b de l'outil 200, c'est-à-dire que le siège 300 est posé sur l'outil 200 dans le véhicule, mais peut être déplacé, comme expliqué ci-après. Ce siège 300 comprend des attaches avant 301 aptes à coopérer avec les moyens d'arrimage avant 103 de la cuvette 100 et des moyens d'arrimage arrière 302 aptes à coopérer avec les moyens d'arrimage arrière 104 de la cuvette 100. Par exemple, ces attaches 301,302 sont des crochets ou des fentes aptes à coopérer avec les gorges 103a, 104a des moyens d'arrimage 103,104.

Afin d'assembler le siège 300 dans la cuvette 100, le siège est mis en mouvement vers l'avant dans une troisième étape par un opérateur et coulisse le long de la surface longitudinale 211 de l'outil 200 selon la flèche visible sur les figures 4 et 7. Ce mouvement de coulissement est aidé par le poids du siège 300 et l'inclinaison de la surface longitudinale 211 qui forme alors une rampe, et seul un effort modéré ou nul est nécessaire pour mettre en mouvement le siège 300. En outre, l'outil 200 est retenu et immobilisé par la coopération entre les butées 213 et les moyens d'arrimage arrière 104 et n'est pas entrainé au fond de la cuvette 100.

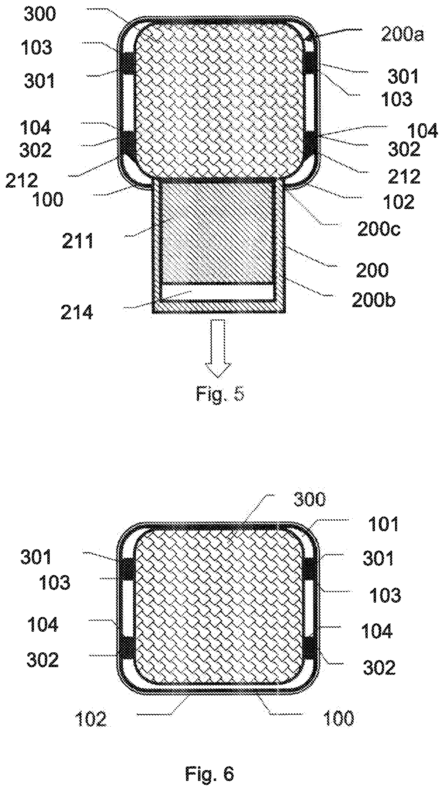

Sur la figure 5, le siège 300 a coulissé le long de la surface longitudinale 211 de l'outil 200 et recouvre désormais la partie avant 200a de l'outil 200, qui est alors non visible. Le siège 300 est alors dans une position d'accostage, c'est-à-dire que ses attaches arrière 302 sont situées à proximité des moyens d'arrimage arrière 104 de la cuvette 100 sans pouvoir les engager, du fait de la présence des ailes 212 et/ou des butées 213 de l'outil 200. Par ailleurs, les attaches avant 301 du siège ont engagé ou enclipsé les moyens d'arrimage avant 103 à la fin du mouvement de coulissement et le siège est donc déjà partiellement attaché ou arrimé à la cuvette 100.

L'outil 200 est alors saisi par l'opérateur par l'évidement proximal 214 servant de poignée et tiré vers l'arrière selon la flèche visible sur la figure 5, selon une quatrième étape du procédé d'assemblage. La surface longitudinale 211 coulisse donc sous le siège 300 qui n'est pas entrainé du fait de l'engagement entre les attaches avant 301 et les moyens d'arrimage avant 103 de la cuvette 100. De plus, les ailes 212 et les butées 213 sont désengagées des moyens d'arrimage arrière 104 et permettent alors au siège de tomber ou pivoter vers le fond de la cavité 100 par un mouvement vers le bas de sa partie arrière. Le mouvement du siège est donc globalement un mouvement de rotation vers le fond 101 autour des attaches avant 301. Durant ce mouvement, les attaches arrière 302 du siège engagent ou enclipsent les moyens d'arrimage arrière 104, de façon passive, c'est-à-dire sans autre mouvement que de dégager l'outil 200 et le siège 300 est désormais assemblé ou arrimé à la cuvette 100 et donc au véhicule, comme représenté sur la figure 6.

Ainsi, les moyens d'arrimage 103,104, le siège 300 et l'outil 200 forment un système ou un ensemble permettant d'assembler le siège 300 au véhicule.

On comprendra que diverses modifications et/ou améliorations évidentes pour l'homme du métier peuvent être apportées aux différents modes de réalisation de l'invention décrits dans la présente description sans sortir du cadre de l'invention. En particulier, il est fait référence aux moyens d'arrimage 103, 104, et aux attaches 301,302 du siège 300 qui peuvent prendre tout type de formes complémentaires, par exemple boucle-crochet ou pêne-gâche, de même pour les butées 13,213. En outre, le nombre de moyens d'arrimage, d'attaches et de butées n'est pas limité aux exemples des figures 1 à 6 et peut comprendre tout nombre nécessaire.

## Revendications

1. Outil (10, 200) d'assemblage d'un siège (300) dans un véhicule comprenant au moins deux moyens d'arrimage (104) pour fixer ledit siège (300) au véhicule, ledit outil (10, 200) comprenant :
• au moins une surface longitudinale (11, 211) centrale |0022] agencée pour accueillir ledit siège (300) dans une position intermédiaire et une position d'accostage, la surface longitudinale (11, 211) de l'outil en position d'assemblage formant une rampe de sorte à guider le siège (300) depuis la position intermédiaire vers la position d'accostage du siège (300) avec ledit moyen d'arrimage (104),
• la surface longitudinale comportant au moins deux ailes transversales comprenant chacune une butée (13, 213) longitudinale en forme de U agencée pour coopérer avec un desdits moyens d'arrimage (104) afin d'immobiliser ledit outil (10,200) dans une position d'assemblage, les deux butées (13, 213) étant situées de part et d'autre de la surface longitudinale (13, 213).

2. Outil (10,200) selon la revendication précédente, **caractérisé en ce que** la surface longitudinale (11,211) est pourvue d'une poignée agencée pour faciliter le dégagement de l'outil (10,200) de l'espace entre le siège (300) et le moyen d'arrimage (104).

3. Système pour l'assemblage d'un siège dans un véhicule, le système comprenant :
• au moins deux moyens d'arrimage (103,104) pour fixer ledit siège (300) au véhicule,
• au moins un siège (300) agencé pour s'arrimer aux-dit moyens d'arrimage (103,104),
• un outil (10,200) selon l'une quelconque des revendications précédentes.

4. Système selon la revendication précédente, **caractérisé en ce qu'**il comprend, selon un axe longitudinal du véhicule,
- un moyen d'arrimage avant (103) et deux moyens d'arrimage arrière (104),
- et dans lequel ledit outil (10,200) dans la position d'assemblage est positionné avec les butées (13, 213) coopérant avec les moyens d'arrimage arrière (104) pour immobiliser ledit outil.

5. Système selon la revendication précédente, dans lequel le siège (300) dans la position d'accostage est arrimé au moyen d'arrimage avant (103) et se situe à proximité des moyens d'arrimage arrière (104).

6. Procédé d'assemblage d'un siège (300) dans un véhicule, ledit véhicule comprenant au moins deux moyens d'arrimage (104) pour le siège (300), ledit procédé comprenant les étapes consistant à :
• mettre en appui sur lesdits moyens d'arrimage (104) chacune des butées (13,213) d'un outil (10,200) selon l'une des revendications 1 à 2 pour immobiliser ledit outil (10,200) dans une position d'assemblage,
• positionner un siège (300) dans une position intermédiaire sur ladite surface longitudinale (11,211) dudit outil (10,200),
• faire coulisser le siège (300) le long de la surface longitudinale (11, 211) jusqu'à une position d'accostage dans laquelle le siège (300) se situe à proximité dudit moyen d'arrimage (104),
• dégager l'outil (10,200) de l'espace entre le siège (300) et le moyen d'arrimage (104),
• arrimer le siège (300) aux moyens d'arrimage (104).

7. Procédé selon la revendication précédente, dans lequel le véhicule comprend, selon un axe longitudinal, un moyen d'arrimage avant (103) et deux moyens d'arrimage arrière (104), et dans lequel ledit outil (10,200) dans la position d'assemblage est positionné avec les butées (13,213) coopérant avec les moyens d'arrimage arrière (104) pour immobiliser ledit outil (10,200).

8. Procédé selon la revendication précédente, dans lequel le siège (300) dans la position d'accostage est arrimé au moyen d'arrimage avant (103) et est disposé à proximité du moyen d'arrimage arrière (104).

## Patentansprüche

1. Werkzeug (10, 200) zum Zusammenbauen eines Sitzes (300) in einem Fahrzeug mit mindestens zwei Befestigungsmitteln (104) zum Befestigen des Sitzes (300) am Fahrzeug, wobei das Werkzeug (10, 200) Folgendes umfasst:
- mindestens eine zentrale Längsfläche (11, 211) |0022], der so angeordnet ist, dass er den Sitz (300) in einer Zwischenposition und einer Andockposition aufnimmt, wobei die Längsfläche (11, 211) des Werkzeugs in der Montageposition eine Rampe bildet, sodass der Sitz (300) von der Zwischenposition in die Andockposition des Sitzes (300) mit dem Befestigungsmittel (104) geführt wird,
- die Längsoberfläche hat mindestens zwei Querflügel, von denen jeder einen U-förmigen Längsanschlag (13, 213) aufweist, der so angeordnet ist, dass er mit einer der Befestigungseinrichtungen (104) zusammenwirkt, um das Werkzeug (10, 200) in einer Montageposition zu fixieren, wobei die beiden Anschläge (13, 213) auf beiden Seiten der Längsoberfläche (13, 213) angeordnet sind.

2. Werkzeug (10, 200) nach dem vorhergehenden Anspruch, **dadurch gekennzeichnet, dass** die Längsfläche (11, 211) mit einem Griff versehen ist, der angeordnet ist, um das Lösen des Werkzeugs (10, 200) aus dem Raum zwischen dem Sitz (300) und dem Befestigungsmittel (104) zu erleichtern.

3. System für die Montage eines Sitzes in einem Fahrzeug, bestehend aus:
- mindestens zwei Befestigungsmittel (103, 104) zur Befestigung des Sitzes (300) am Fahrzeug,
- mindestens einem Sitz (300), der so angeordnet ist, dass er an den genannten Befestigungsmitteln befestigt wird (103,104),
- Werkzeug (10, 200) nach einem der vorhergehenden Ansprüche.

4. System nach dem vorhergehenden Anspruch, **dadurch gekennzeichnet, dass** es entlang einer Längsachse des Fahrzeugs umfasst:
- ein vorderes (103) und zwei hintere (104) Verankerungsmittel,
- und wobei das Werkzeug (10, 200) in der Montageposition mit den Anschlägen (13, 213) positioniert ist, die mit den hinteren Befestigungsmitteln (104) zusammenwirken, um das Werkzeug zu fixieren.

5. System nach dem vorhergehenden Anspruch, bei dem der Sitz (300) in der Andockposition an der vorderen Andockeinrichtung (103) befestigt ist und sich in der Nähe der hinteren Andockeinrichtung (104) befindet.

6. Verfahren zum Montieren eines Sitzes (300) in einem Fahrzeug, wobei das Fahrzeug mindestens zwei Befestigungsmittel (104) für den Sitz (300) umfasst, wobei das Verfahren die folgenden Schritte umfasst:
- drücken jedes der Anschläge (13, 213) eines Werkzeugs (10, 200) nach einem der Ansprüche 1 bis 2 gegen die Befestigungsmittel (104), um das Werkzeug (10, 200) in einer Montageposition zu fixieren,
- positionieren eines Sitzes (300) in einer Zwischenposition auf der Längsfläche (11, 211) des Werkzeugs (10, 200),
- den Sitz (300) entlang der Längsfläche (11, 211) in eine Andockposition schieben, in der sich der Sitz (300) in der Nähe des Verankerungsmittels (104) befindet,
- das Werkzeug (10,200) aus dem Raum zwischen dem Sitz (300) und dem Verankerungsmittel (104) lösen,
- der Sitz (300) ist an den Befestigungsmitteln (104) zu befestigen.

7. Verfahren nach dem vorhergehenden Anspruch, bei dem das Fahrzeug entlang einer Längsachse ein vorderes Befestigungsmittel (103) und zwei hintere Befestigungsmittel (104) aufweist, und bei dem das Werkzeug (10, 200) in der Montageposition positioniert wird, wobei die Anschläge (13, 213) mit dem hinteren Befestigungsmittel (104) zusammenwirken, um das Werkzeug (10, 200) zu fixieren.

8. Verfahren nach dem vorhergehenden Anspruch, wobei der Sitz (300) in der Andockposition an der vorderen Andockeinrichtung (103) befestigt ist und in der Nähe der hinteren Andockeinrichtung (104) angeordnet ist.

## Claims

1. Tool (10, 200) for assembling a seat (300) in a vehicle comprising at least two securing means (104) for fixing said seat (300) to the vehicle, said tool (10, 200) comprising:
- at least one central longitudinal surface (11, 211) |0022] arranged to receive said seat (300) in an intermediate position and a docking position, the longitudinal surface (11, 211) of the tool in the assembly position forming a ramp so as to guide the seat (300) from the intermediate position to the docking position of the seat (300) with said securing means (104),
- the longitudinal surface comprising at least two transverse wings each comprising a longitudinal stop (13, 213) in the form of a U arranged to cooperate with one of said securing means (104) in order to immobilize said tool (10, 200) in an assembly position, the two stops (13, 213) being situated on either side of the longitudinal surface (13, 213).

2. Tool (10, 200) according to the preceding claim, **characterized in that** the longitudinal surface (11, 211) is provided with a handle arranged to facilitate the disengagement of the tool (10, 200) from the space between the seat (300) and the securing means (104).

3. System for assembling a seat in a vehicle, the system comprising:
- at least two securing means (103, 104) for fixing said seat (300) to the vehicle,
- at least one seat (300) arranged to be secured to said securing means (103, 104),
- a tool (10, 200) according to any one of the preceding claims.

4. System according to the preceding claim, **characterized in that** it comprises, along a longitudinal axis of the vehicle,
- one front stowage means (103) and two rear stowage means (104),
- and wherein said tool (10, 200) in the assembly position is positioned with the stops (13, 213) cooperating with the rear securing means (104) to immobilize said tool.

5. System according to the preceding claim, in which the seat (300) in the docking position is stowed to the front stowage means (103) and is situated close to the rear stowage means (104).

6. A method of assembling a seat (300) in a vehicle, said vehicle comprising at least two securing means (104) for the seat (300), said method comprising the steps of:
- pressing on said securing means (104) each of the stops (13, 213) of a tool (10, 200) according to one of claims 1 to 2 in order to immobilize said tool (10, 200) in an assembly position,
- positioning a seat (300) in an intermediate position on said longitudinal surface (11, 211) of said tool (10, 200),
- sliding the seat (300) along the longitudinal surface (11, 211) to a docking position in which the seat (300) is situated in proximity to said securing means (104),
- removing the tool (10, 200) from the space between the seat (300) and the securing means (104),
- fastening the seat (300) to the fastening means (104).

7. Method according to the preceding claim, in which the vehicle comprises, along a longitudinal axis, a front securing means (103) and two rear securing means (104), and in which said tool (10, 200) in the assembly position is positioned with the stops (13, 213) cooperating with the rear securing means (104) to immobilize said tool (10, 200).

8. Method according to the preceding claim, in which the seat (300) in the docking position is stowed to the front stowage means (103) and is disposed close to the rear stowage means (104).
